# EUROPEAN PATENT SPECIFICATION

(11) **EP 4 137 733 B1**
(45) Date of publication and mention of the grant of the patent: **27.11.2024**
(21) Application number: 22183311.4
(22) Date of filing: 06.07.2022
(51) Int. Cl.: F16L 37/47

(54) **GAS SWITCHING DEVICE**
GASSCHALTVORRICHTUNG
DISPOSITIF DE COMMUTATION DE GAZ

(30) Priority: 16.08.2021 TW 110130064
(43) Date of publication of application: 22.02.2023
(73) Proprietor: Grand Mate Co., Ltd., Taichung City 401 (TW)
(72) Inventor: HUANG, Chung-Chin, 401 Taichung City (TW); HUANG, Chin-Ying, 401 Taichung City (TW); HUANG, Hsin-Ming, 401 Taichung City (TW); HUANG, Hsing-Hsiung, 401 Taichung City (TW); YEH, Yen-Jen, 412 Taichung City (TW)
(74) Representative: Viering, Jentschura & Partner mbB Patent- und Rechtsanwälte

(56) References cited:
- DE-A1- 2 135 819
- GB-A- 347 397
- US-A- 3 100 619
- US-A- 3 826 464

## Description

### BACKGROUND OF THE INVENTION

### Technical Field

The present invention relates generally to a gas switching device that could remove a gas pipe.

### Description of Related Art

Typically, a gas switch is disposed on a gas pipeline connected to the gas appliance for opening/blocking the gas supplied to the gas appliance. To increase a safety of using the gas, the gas switch should be turned off to avoid gas leakage and causing disasters when sleeping at night, going out, or not using gas for a short period time.

A conventional gas switch has an inlet connector and an outlet connector, wherein the inlet connector is usually locked on a gas pipeline to communicate with a gas source. The outlet connector is fixed to a gas hose and is connected to the gas appliance via the gas hose. Turn a handle of a gas switch device to drive a ball valve inside the gas switch device to open or close the gas supplied to the gas appliance.

Usually, the gas hose is fastened to the outlet connector by a tube bundle. When a user is about to remove the gas hose, the handle should be turned first to close the gas, and then release the tube bundle to remove the gas hose from the outlet connector, which is inconvenient. Additionally, after removing the gas hose, it may cause the gas to leak from the outlet connector if the handle is accidentally touched, which is dangerous.

Therefore, the conventional gas switch device still has room for improvement.

GB 347 397 A discloses a gas cock plug which is associated with a usual hand-operated plug cock on the gas supply, and which is actuated by the act of coupling and uncoupling of a flexible piping. The plug is formed on its outer end with a reverse taper to nest tightly with a complementary taper formed within the end of a coupling sleeve. The plug lies wholly within the cock body and the extended mouth is formed with a bayonet slot to receive projections on the coupling sleeve. Recesses in the outer end of the plug are also engaged by internal projections in the sleeve whereby the plug is operated. The flexible or other pipe is connected to the sleeve by means of a screw.

DE 21 35 819 A1 discloses a safety hose connection tap with a valve body to increase a security.

US 3 100 619 A discloses a gas connection tap with a hose connection part.

US 3 826 464 A discloses a disengageable safety coupling for conduits.

### BRIEF SUMMARY OF THE INVENTION

In view of the above, the primary objective of the present invention is to provide a gas switching device, which could easily use the gas and enhance a safety of use.

The present invention and its preferred embodiments are apparent from the appendant set of claims.

With the aforementioned design, the plug member could be turned by the manipulating member, and the gas could be transmitted to the gas pipe via the gas passage inside the manipulating member, which is more convenient to use the gas, wherein after use, the manipulating member could be removed together with the gas pipe. In addition, since the plug member is inside the valve body, the plug member would not be touched by mistake to lead to a problem that the output gas leaks from the outlet port, enhancing a safety of use.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the gas switching device according to an embodiment of the present invention;
FIG. 2 is an exploded perspective view of the gas switching device according to the embodiment of the present invention;
FIG. 3 is a perspective view of the valve body and the switching assembly according to the embodiment of the present invention;
FIG. 4 is an exploded perspective view, showing the valve body and the switching assembly according to the embodiment of the present invention;
FIG. 5 is a front view of the valve body and the switching assembly according to the embodiment of the present invention;
FIG. 6 is an exploded perspective of the valve body and the switching assembly according to the embodiment of the present invention;
FIG. 7 is a top view of the valve body according to the embodiment of the present invention;
FIG. 8 is a sectional view along the 7-7 line in FIG. 7;
FIG. 9 is a sectional view along the 9-9 line in FIG. 3;
FIG. 10 is a perspective view of the manipulating member according to the embodiment of the present invention;
FIG. 11 is a sectional view along the 11-11 line in FIG. 10;
FIG. 12 is a sectional view along the 12-12 line in FIG. 1; and
FIG. 13 is a schematic view, showing the manipulating member drives the plug member to open the side opening.

### DETAILED DESCRIPTION OF THE INVENTION

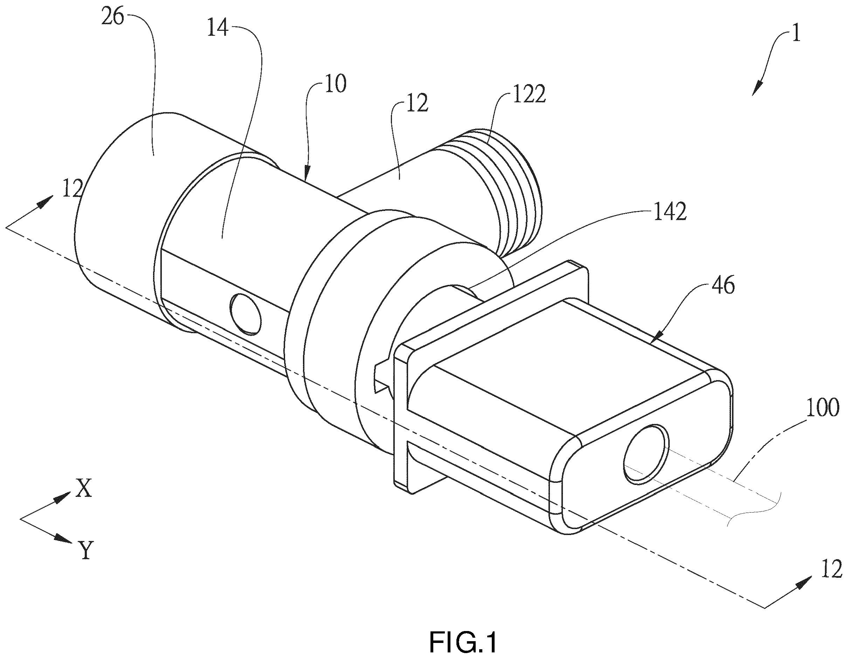

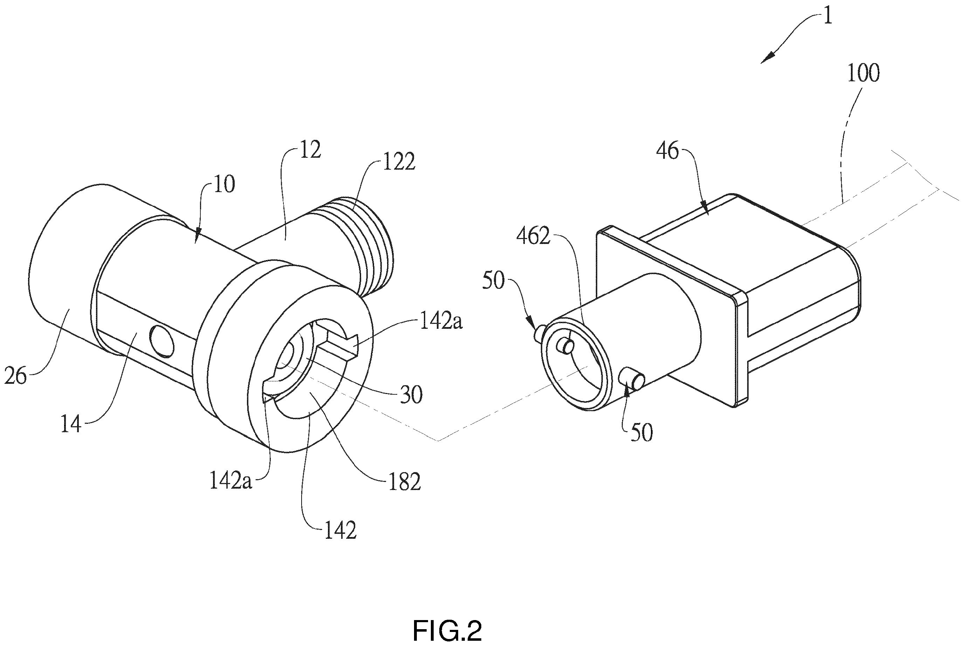

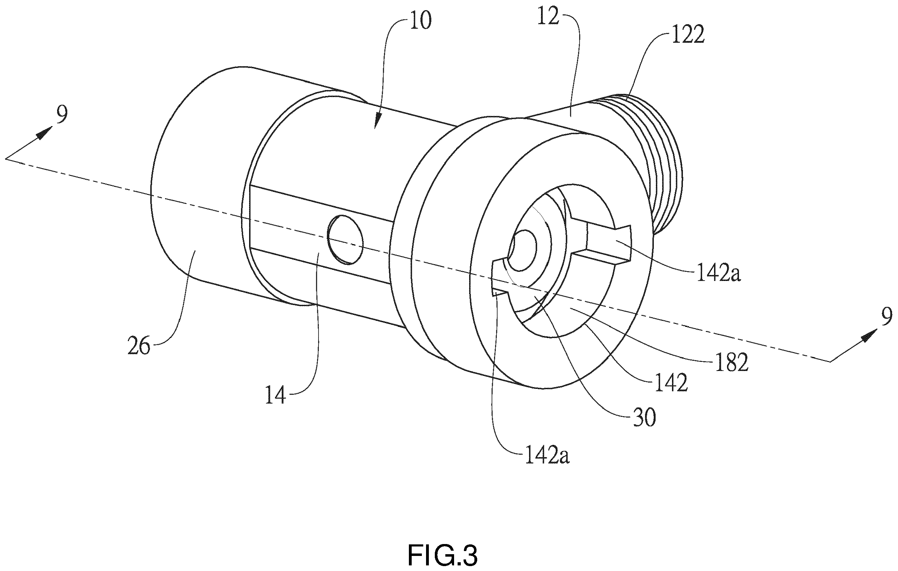

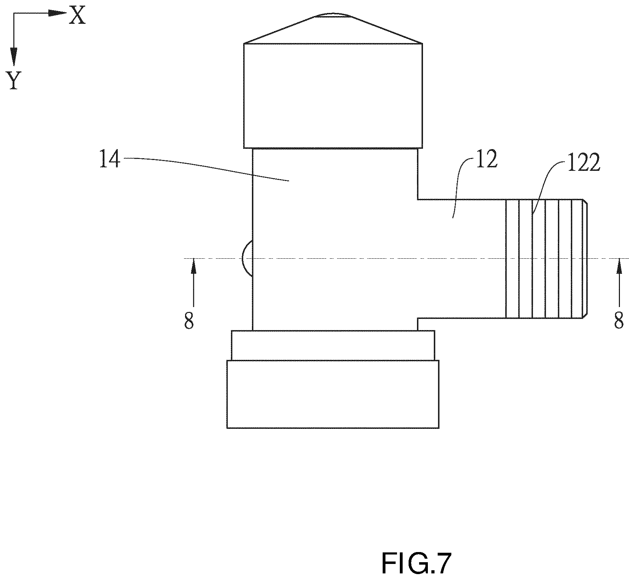

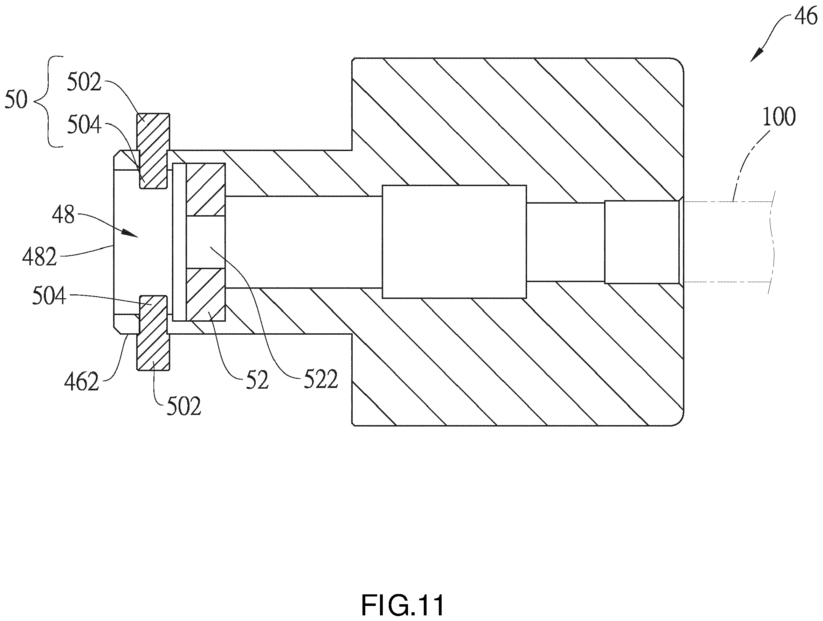

A gas switching device 1 according to an embodiment of the present invention is illustrated in FIG. 1 to FIG. 13 and includes a valve body 10, a switching assembly 28, and a manipulating member 46 with the essential features of the gas switching device 1 according to the present invention being set forth in appended claim 1.

The valve body 10 has an inlet portion 12 and an outlet portion 14, wherein the inlet portion 12 is tubular and has an external threaded section 122 for engaging with a gas supplying tube (not shown). The inlet portion 12 has an inlet passage 124 for injecting gas and extends in a first axial direction X.

The outlet portion 14 is tubular and is connected to the inlet portion 12, wherein the outlet portion 14 extends in a second axial direction Y which intersects the first axial direction X. In the current embodiment, the second axial direction Y is substantially perpendicular to the first axial direction X. The outlet portion 14 has an outlet port 142 for connecting the manipulating member 46.

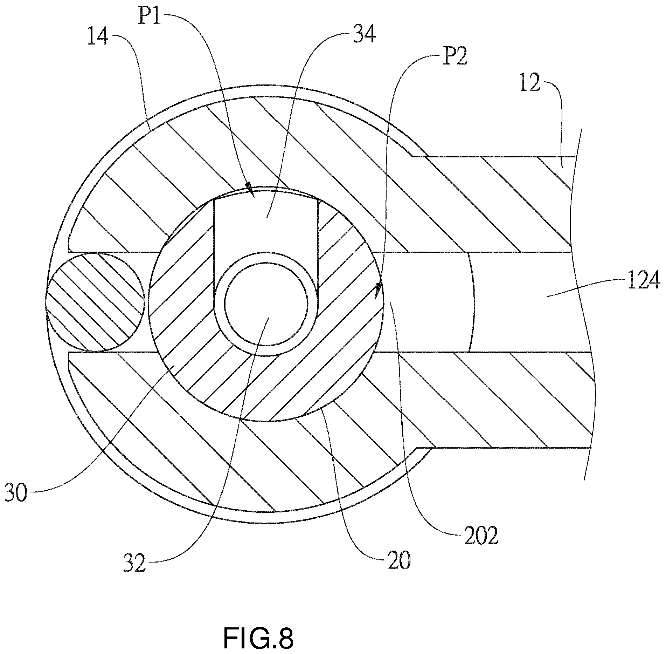

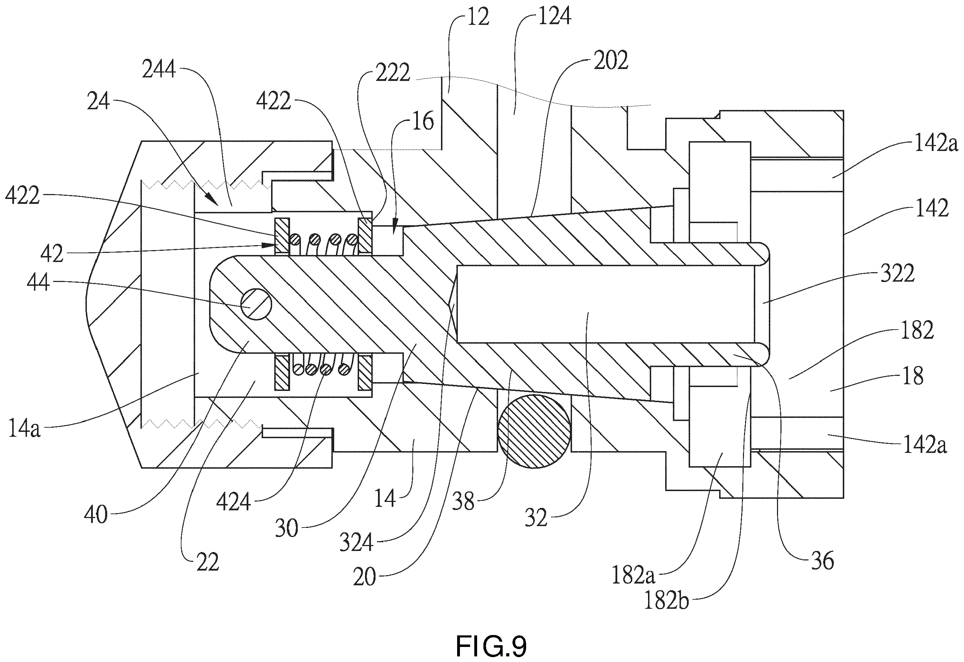

Referring to FIG. 8 and FIG. 9, the outlet portion 14 has a receiving hole 16, wherein the receiving hole 16 has a first section 18, a second section 20, and a third section 22 connected in sequence along an axial direction thereof. The outlet port 142 is located at the first section 18. The first section 18 has a connecting passage 182. The second section 20 is located between the first section 18 and the third section 22 and forms a receiving chamber, wherein a hole wall of the second section 20 is tapered in shape. More specifically, a diameter of the second section 20 gradually decreases in a direction from the first section 18 to the third section 22. The hole wall of the second section 20 (i.e., a wall of the receiving chamber) has a side opening 202 communicating with the inlet passage 124. A junction between the third section 22 and the second section 20 has a shoulder portion 222. An inner wall of the connecting passage 182 (i.e., a hole wall of the first section 18) has an annular groove 182a. An end portion of the outlet port 142 has at least one recess 142a. In the current embodiment, a number of the at least one recess 142a is two, and the two recesses 142a communicate with the annular groove 182a. The annular groove 182a has a groove wall 182b facing the second section 20.

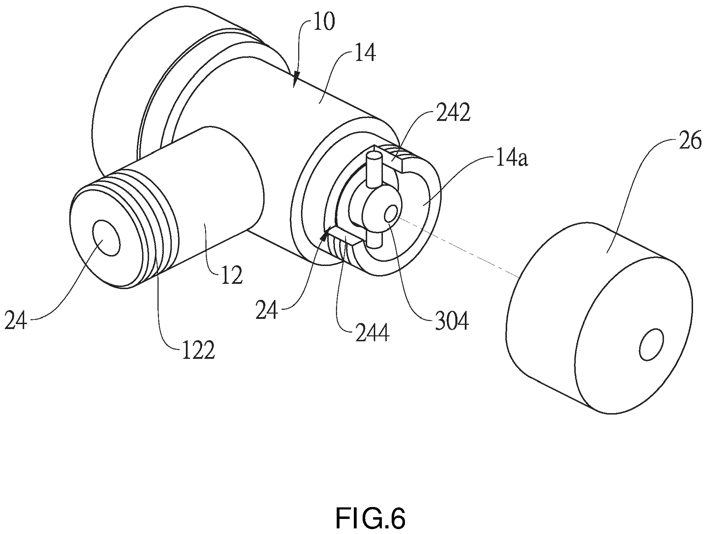

Additionally, the outlet portion 14 has a restricting groove 24 located at a radial periphery of the third section 22 and communicating with the third section 22. Two end walls of the restricting groove 24 respectively form a first blocking portion 242 and a second blocking portion 244 (as shown in FIG. 6). In the current embodiment, the outlet portion 14 has an open end 14a at an outer side of the third section 22, and a rear cover 26 is engaged around a radial periphery of the third section 22 in a threaded way to close the open end 14a.

The switching assembly 28 includes a plug member 30, wherein the plug member 30 has a first end 302 and a second end 304 opposite to the first end 302 in an axial direction thereof. At least a part of the plug member 30 is located in the second section 20 of the receiving hole 16. The plug member 30 has an axial hole 32 and a through hole 34 located in a radial direction of the plug member 30, wherein the axial hole 32 communicates with the through hole 34 and the outlet port 142. More specifically, the plug member 30 includes a driving section 36, a tapered section 38, and an extending section 40, wherein the driving section 36 has the first end 302, and the tapered section 38 is located between the driving section 36 and the extending section 40, and the driving section 36 is located at the first section 18. The tapered section 38 is located at the second section 20, wherein an outer peripheral surface of the tapered section 38 matches with the hole wall of the second section 20. The extending section 40 is located at the third section 22 and has the second end 304.

The axial hole 32 has an open side 322 and a close side 324, wherein the open side 322 is formed at the first end 302, and the close side 324 is located at the tapered section 38 and is located between the first end 302 and the second end 304. The through hole 34 is located on the tapered section 38.

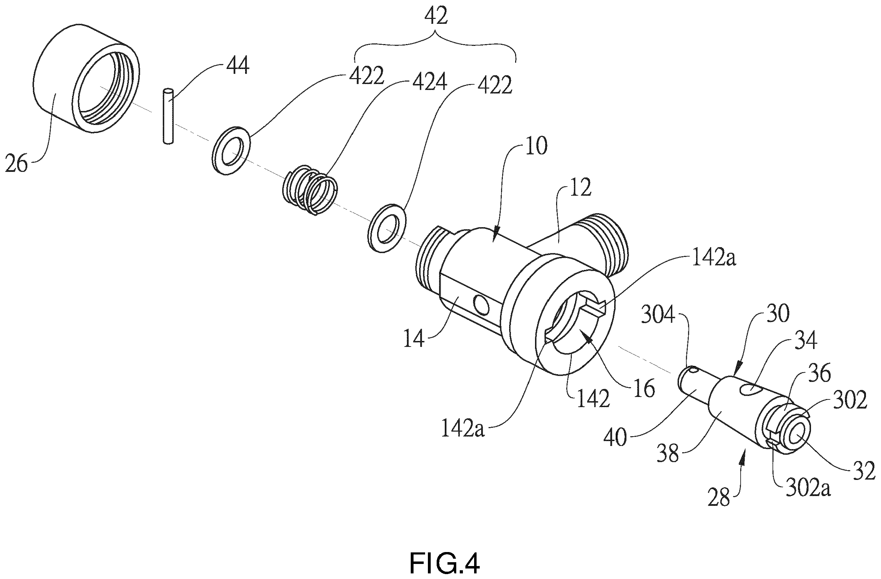

The first end 302 has at least one notch 302a. In the current embodiment, referring to FIGs. 4-5, a number of the at least one notch 302a is two, wherein the two notches 302a are located at two opposite sides of a radial periphery of the axial hole 32. The annular groove 182a of the outlet port 142 surrounds a radial periphery of the two notches 302a.

The switching assembly 28 further includes an elastic member 42, wherein an end of the elastic member 42 abuts against the shoulder portion 222, while another end of the elastic member 42 exerts a force on the extending section 40 in a direction away from the shoulder portion 222, so that the outer peripheral surface of the tapered section 38 could tightly abut against the hole wall of the second section 20. In the current embodiment, the switching assembly 28 includes a blocking member which is a blocking rod 44 as an example, wherein the blocking rod 44 is disposed at the extending section 40 of the plug member 30 and extends in a radial periphery of the extending section 40. Another end of the elastic member 42 abuts against the blocking rod 44. The elastic member 42 includes a spring 424 and two blocking plates 422 fitting around the extending section 40, wherein the spring 424 is located between the two blocking plates 422. One of the blocking plates 422 forms an end of the elastic member 42 and abuts against the shoulder portion 222, while the other blocking plate 422 forms another end of the elastic member 42 and abuts against the blocking rod 44. An end of the blocking rod 44 extends into the restricting groove 24 and is located between the first blocking portion 242 and the second blocking portion 244 for restricting a rotation angle of the plug member 30.

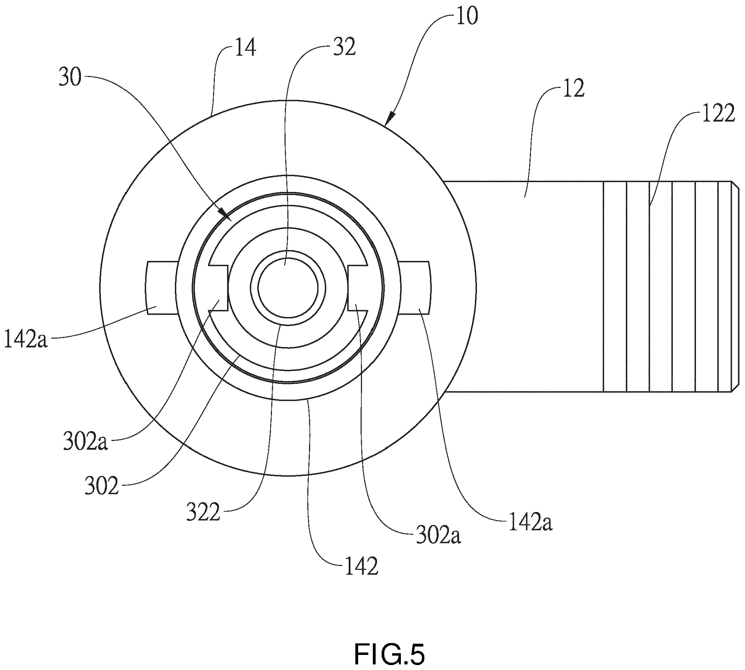

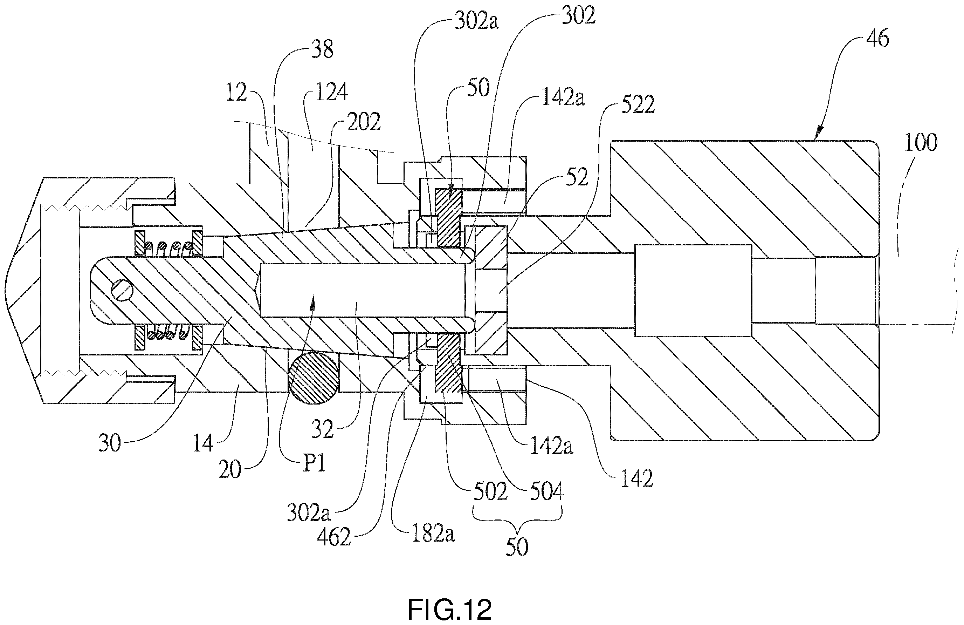

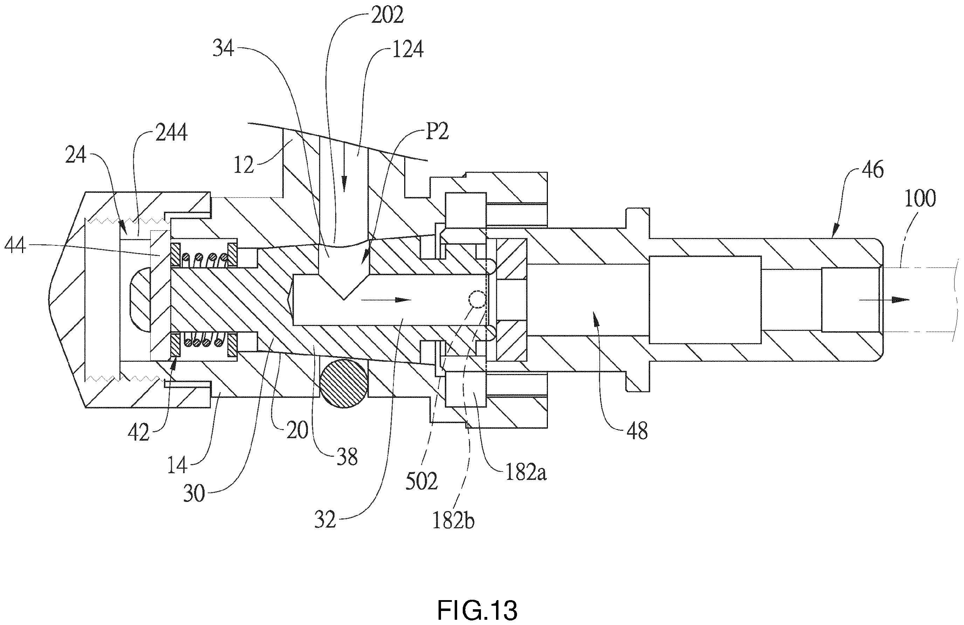

Referring to FIG. 8, FIG. 12, and FIG. 13, the plug member 30 is manipulable to turn in the axial direction of the plug member 30 between a first position P1 and a second position P2. Referring to FIG. 12, when the plug member 44 is at the first position P1, the outer peripheral surface of the tapered section 38 of the plug member 30 closes the side opening 202 to block the output gas, and the notches 302a on the first end 302 of the plug member 30 and the recess 142a of the outlet port 142 are located at the same reference plane (as shown in FIG. 5), and the blocking rod 44 abuts against the first blocking portion 242. Referring to FIG. 13, when the plug member 30 is at the second position P2, the blocking rod 44 abuts against the second blocking portion 244, and the through hole 34 communicates with the side opening 202 to open the output gas, allowing the output gas being outputted through the outlet port 142.

The manipulating member 46 has a connecting end 462 and has a gas passage 48 therein. An end of the gas passage 48 forms an inlet 482 at the connecting end 462, while another end of the gas passage 48 is adapted to communicate with a gas pipe 100, wherein the gas pipe 100 could be a hose and be connected to a gas apparatus. The manipulating member 46 is detachably connected to the outlet port 142 via the connecting end 462, and the connecting end 462 is connected to the plug member 30, and the gas passage 48 communicates with the axial hole 32. The manipulating member 46 drives the plug member 30 to turn between the first position P1 and the second position P2.

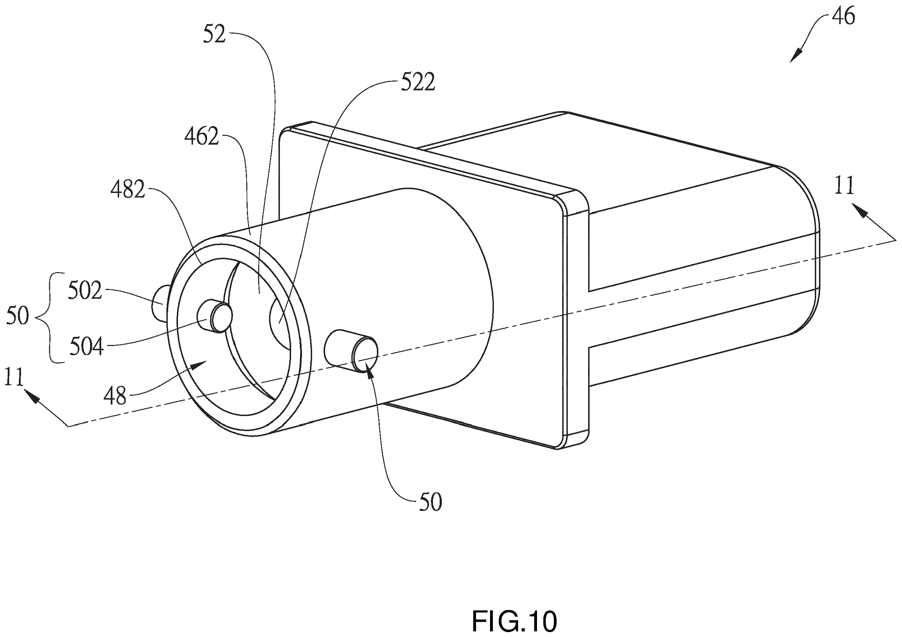

More specifically, referring to FIG. 10 to FIG. 13, the connecting end 462 of the manipulating member 46 is configured with at least one positioning member 50. In the current embodiment, a number of the at least one positioning member 50 is two. When the plug member 30 is located at the first position P1, each of the positioning members 50 could enter the annular groove 182a via one of the recesses 142a of the outlet port 142, and could further enter one of the notches 302a of the plug member 30.

In the current embodiment, the positioning members 50 are disposed in a radial direction of the connecting end 462, wherein each of the positioning members 50 has an outer end 502 protruding out of a radial periphery of the connecting end 462 and an inner end 504 located in the gas passage 48. A sealing member 52 is disposed in the gas passage 48 and has a through hole 522 communicating with the gas passage 48.

When the plug member 30 is located at the first position P1 and the connecting end 462 is connected to the plug member 30, the outer end 502 of each of the positioning members 50 enters the annular groove 182a via one of the recesses 142a, and the inner end 504 of each of the positioning members 50 enters one of the notches 302a. The first end 302 of the plug member 30 is located in the gas passage 48 and abuts against the sealing member 52. The open side 322 of the axial hole 32 communicates with the through hole 522 and the gas passage 48. When the user turns the manipulating member 46, the inner end 504 of each of the positioning members 50 abuts against a wall of each of the notches 302a to drive the plug member 30 to turn to the second position P2 in the axial direction thereof. During the turn, when the outer end 502 of each positioning member 50 leaves a projection range of one of the recesses 142a, the groove wall 182b of the annular groove 182a restricts the outer end 502 of each positioning member 50 to the annular groove 182a (as shown at the dotted line in FIG. 12). In this way, when the plug member 30 turns from the first position P1 to the second position P2, the annular groove 182a restricts the manipulating member 46 from disengaging, and the first end 302 of the plug member 30 stably abuts against the sealing member 52, thereby the output gas outputted from the axial hole 32 of the plug member 30 could enter the gas passage 48 of the manipulating member 46 to be transmitted to the gas pipe 100.

When the user does not use gas, the manipulating member 46 could be turned in a reverse direction, and the plug member 30 could be turned back to the first position P1, so that the plug member 30 could block the gas, and the manipulating member 46 could be removed from the outlet port 142 of the valve body 10.

With the aforementioned design, it is more convenient to use the output gas by using the manipulating member 46 to turn the plug member 30 to allow the output gas to be transmitted to the gas pipe 100 via the gas passage 48 in the manipulating member 46. After use, the manipulating member 46 could be removed together with the gas pipe 100. Additionally, since the plug member 30 is in the valve body 10, the plug member 30 would not be touched by mistake to lead to a problem that the output gas leaks from the outlet port 142, which enhances a safety of use.

## Claims

1. A gas switching device (1), comprising:
a valve body (10) having an inlet portion (12) and an outlet portion (14), wherein the inlet portion (12) has an inlet passage (124) for injecting gas; the outlet portion (14) has an outlet port (142) and a receiving chamber; a wall of the receiving chamber has a side opening (202) communicating with the inlet passage (124);
a switching assembly (28) comprising a plug member (30) located in the receiving chamber, wherein the plug member (30) has a through hole (34) located at a radial direction of the plug member (30) and an axial hole (32) communicating with the through hole (34) and the outlet port (142); the plug member (30) is turnable between a first position (P1) and a second position (P2) in an axial direction of the plug member (30); when the plug member (30) is at the first position (P1), an outer peripheral surface of the plug member (30) closes the side opening (202); when the plug member (30) is at the second position (P2), the through hole (34) communicates with the side opening (202); and
a manipulating member (46) having a connecting end (462) and has a gas passage (48) therein, wherein an end of the gas passage (48) forms an inlet (482) at the connecting end (462), and another end of the gas passage (48) is adapted to communicate with a gas pipe (100); the manipulating member (46) is detachably connected to the outlet port (142) via the connecting end (462); the connecting end (462) is connected to the plug member (30), and the gas passage (48) communicates with the axial hole (32); the manipulating member (46) drives the plug member (30) to turn between the first position (P1) and the second position (P2);
wherein at least one positioning member (50) is disposed on the connecting end (462) of the manipulating member (46); the outlet port (142) of the valve body (10) has a connecting passage (182); an inner wall of the connecting passage (182) has an annular groove (182a); an end portion of the outlet port (142) has at least one recess (142a) communicating with the annular groove (182a); the at least one positioning member (50) enters the annular groove (182a) via the at least one recess (142a);
wherein the plug member (30) has a first end (302) and a second end (304) opposite to the first end (302) in an axial direction of the plug member (30); the axial hole (32) has an open side (322) formed at the first end (302) and a close side (324) located between the first end (302) and the second end (304); the first end (302) has at least one notch (302a); the annular groove (182a) surrounds a radial periphery of the at least one notch (302a); when the plug member (30) is located at the first position (P1), the at least one positioning member (50) enters the at least one notch (302a) via the at least one recess (142a) and is adapted to drive the plug member (30) to turn to the second position (P2) along the axial direction of the plug member (30);
wherein the at least one positioning member (50) is arranged in a radial direction of the connecting end (462) and has an outer end (502) protruding out of a radial periphery of the connecting end (462) and an inner end (504) located in the gas passage (48); when the connecting end (462) is connected to the plug member (30), the first end (302) of the plug member (30) is located in the gas passage (48), and the inner end (504) of the at least one positioning member (50) enters the at least one notch (302a), and the outer end (502) of the at least one positioning member (50) enters the annular groove (182a).

2. The gas switching device (1) as claimed in claim 1, wherein a sealing member (52) is disposed in the gas passage (48) and has a through hole (522) communicating with the gas passage (48); when the connecting end (462) is connected to the plug member (30), the first end (302) of the plug member (30) abuts against the sealing member (52), and the open side (322) of the axial hole (32) communicates with the through hole (522).

3. The gas switching device (1) as claimed in claim 1, wherein when the at least one positioning member (50) drives the plug member (30) to turn to the second position (P2) along the axial direction of the plug member (30), a groove wall (182b) of the annular groove (182a) restricts the at least one positioning member (50) in the annular groove (182a).

4. The gas switching device (1) as claimed in claim 1, wherein the outlet portion (14) has a receiving hole (16); the receiving hole (16) has a first section (18), a second section (20), and a third section (22); the first section (18) has the connecting passage (182); the second section (20) is located between the first section (18) and the third section (22); a hole wall of the second section (20) is tapered in shape and forms the receiving chamber, and a diameter of the second section (20) gradually decreases in a direction from the first section (18) to the third section (22); a junction between the third section (22) and the second section (20) has a shoulder portion (222); the plug member (30) comprises a tapered section (38) and an extending section (40); an outer peripheral surface of the tapered section (38) matches with the hole wall of the second section (20); the through hole (34) is located on the tapered section (38); the extending section (40) is connected to the tapered section (38) and is located at the third section (22) of the receiving hole (16); the switching assembly (28) comprises an elastic member (42); an end of the elastic member (42) abuts against the shoulder portion (222), while another end of the elastic member (42) exerts a force on the extending section (40) in a direction way from the shoulder portion (222), so that the outer peripheral surface of the tapered section (38) abuts against the hole wall of the second section (20).

5. The gas switching device (1) as claimed in claim 4, wherein the switching assembly (28) comprises a blocking member disposed at the extending section (40) of the plug member (30); the another end of the elastic member (42) abuts against the blocking member.

6. The gas switching device (1) as claimed in claim 5, wherein the elastic member (42) comprises two blocking plates (422) and a spring (424); the two blocking plates (422) fits around the extending section (40), and one of the blocking plates (422) abuts against the shoulder portion (222), while the other blocking plate (422) abuts against the blocking member; the spring (424) fits around the extending section (40) and is located between the two blocking plates (422).

7. The gas switching device (1) as claimed in claim 5, wherein the outlet portion (14) of the valve body (10) has a restricting groove (24) communicating with the third section (22) of the receiving hole (16); the restricting groove (24) has a first blocking portion (242) and a second blocking portion (244); the blocking member enters the restricting groove (24); when the plug member (30) is turned to the first position (P1), the blocking member abuts against the first blocking portion (242); when the plug member (30) is turned to the second position (P2), the blocking member abuts against the second blocking portion (244).

## Patentansprüche

1. Gas-Schalt-Vorrichtung (1), die aufweist:
einen Ventilkörper (10), welcher einen Einlassabschnitt (12) und einen Auslassabschnitt (14) hat, wobei der Einlassabschnitt (12) eine Einlasspassage (124) zum Einspritzen von Gas hat; wobei der Auslassabschnitt (14) einen Auslassanschluss (142) und eine Aufnahmekammer hat; wobei eine Wand der Aufnahmekammer eine Seitenöffnung (202) hat, die mit der Einlasspassage (124) kommuniziert;
eine Schaltbaugruppe (28), welche ein Steckerelement (30) aufweist, das sich in der Aufnahmekammer befindet, wobei das Steckerelement (30) ein Durchgangsloch (34), das sich in einer radialen Richtung des Steckerelements (30) befindet, und ein axiales Loch (32) hat, das mit dem Durchgangsloch (34) und dem Auslassanschluss (142) kommuniziert; wobei das Steckerelement (30) zwischen einer ersten Position (P1) und einer zweiten Position (P2) in einer axialen Richtung des Steckerelements (30) drehbar ist; wobei, wenn das Steckerelement (30) in der ersten Position (P1) ist, eine äußere Umfangsfläche des Steckerelements (30) die Seitenöffnung (202) verschließt; wobei, wenn das Steckerelement (30) in der zweiten Position (P2) ist, das Durchgangsloch (34) mit der Seitenöffnung (202) kommuniziert; und
ein Stellelement (46), das ein Verbindungsende (462) hat und eine Gaspassage (48) darin, wobei ein Ende der Gaspassage (48) einen Einlass (482) am Verbindungsende (462) bildet und ein anderes Ende der Gaspassage (48) angepasst ist, um mit einer Gasleitung (100) zu kommunizierten; wobei das Stellelement (46) über das Verbindungsende (462) lösbar mit dem Auslassanschluss (142) verbunden ist; wobei das Verbindungsende (462) mit dem Steckerelement (30) verbunden ist und die Gaspassage (48) mit dem axialen Loch (32) kommuniziert; wobei das Stellelement (46) das Steckerelement (30) antreibt, um sich zwischen der ersten Position (P1) und der zweiten Position (P2) zu drehen;
wobei mindestens ein Positionierelement (50) an dem Verbindungsende (462) des Stellelements (46) angeordnet ist; wobei der Auslassanschluss (142) des Ventilkörpers (10) eine Verbindungspassage (182) hat; wobei eine Innenwand der Verbindungspassage (182) eine Ringnut (182a) hat; wobei ein Endabschnitt des Auslassanschlusses (142) mindestens eine Aussparung (142a) hat, die mit der Ringnut (182a) kommuniziert; wobei das mindestens eine Positionierelement (50) über die mindestens eine Aussparung (142a) in die Ringnut (182a) eintritt;
wobei das Steckerelement (30) ein erstes Ende (302) und ein zweites Ende (304) hat, das dem ersten Ende (302) in einer axialen Richtung des Steckerelements (30) entgegengesetzt ist; wobei das axiale Loch (32) eine offene Seite (322), die an dem ersten Ende (302) ausgebildet ist, und eine geschlossene Seite (324) hat, die sich zwischen dem ersten Ende (302) und dem zweiten Ende (304) befindet; wobei das erste Ende (302) mindestens eine Kerbe (302a) hat; wobei die ringförmige Nut (182a) einen radialen Umfang der mindestens einen Kerbe (302a) umgibt; wobei, wenn sich das Steckerelement (30) in der ersten Position (P1) befindet, das mindestens eine Positionierelement (50) über die mindestens eine Aussparung (142a) in die mindestens eine Kerbe (302a) eintritt und angepasst ist, um das Steckerelement (30) anzutreiben, um sich in die zweite Position (P2) entlang der axialen Richtung des Steckerelements (30) zu drehen;
wobei das mindestens eine Positionierelement (50) in einer radialen Richtung des Verbindungsendes (462) angeordnet ist und ein äußeres Ende (502), das aus einem radialen Umfang des Verbindungsendes (462) hervorsteht, und ein inneres Ende (504) hat, das sich in der Gaspassage (48) befindet; wobei, wenn das Verbindungsende (462) mit dem Steckerelement (30) verbunden ist, sich das erste Ende (302) des Steckerelements (30) in der Gaspassage (48) befindet, und das innere Ende (504) des mindestens einen Positionierelements (50) in die mindestens eine Kerbe (302a) eintritt und das äußere Ende (502) des mindestens einen Positionierelements (50) in die ringförmige Nut (182a) eintritt.

2. Gas-Schalt-Vorrichtung (1) nach Anspruch 1, wobei ein Dichtungselement (52) in der Gaspassage (48) angeordnet ist und ein Durchgangsloch (522) hat, das mit der Gaspassage (48) kommuniziert; wobei, wenn das Verbindungsende (462) mit dem Steckerelement (30) verbunden ist, das erste Ende (302) des Steckerelements (30) an dem Dichtungselement (52) anliegt, und die offene Seite (322) des axialen Lochs (32) mit dem Durchgangsloch (522)kommuniziert.

3. Gas-Schalt-Vorrichtung (1) nach Anspruch 1, wobei, wenn das mindestens eine Positionierelement (50) das Steckerelement (30) antreibt, um sich in die zweite Position (P2) entlang der axialen Richtung des Steckerelements (30) zu drehen, eine Nutwand (182b) der ringförmigen Nut (182a) das mindestens eine Positionierelement (50) in der ringförmigen Nut (182a) einschränkt.

4. Gas-Schalt-Vorrichtung (1) nach Anspruch 1, wobei der Auslassabschnitt (14) ein Aufnahmeloch (16) hat; wobei das Aufnahmeloch (16) einen ersten Abschnitt (18), einen zweiten Abschnitt (20) und einen dritten Abschnitt (22) hat; wobei der erste Abschnitt (18) die Verbindungspassage (182) hat; wobei sich der zweite Abschnitt (20) zwischen dem ersten Abschnitt (18) und dem dritten Abschnitt (22) befindet; wobei eine Lochwand des zweiten Abschnitts (20) eine sich verjüngend in Form ist und die Aufnahmekammer bildet, und ein Durchmesser des zweiten Abschnitts (20) allmählich in einer Richtung von dem ersten Abschnitt (18) zu dem dritten Abschnitt (22) abnimmt; wobei eine Verbindung zwischen dem dritten Abschnitt (22) und dem zweiten Abschnitt (20) einen Schulterabschnitt (222) hat; wobei das Steckerelement (30) einen sich verjüngenden Abschnitt (38) und einen sich Erstreckungsabschnitt (40) aufweist; wobei eine äußere Umfangsfläche des sich verjüngenden Abschnitts (38) mit der Lochwand des zweiten Abschnitts (20) zusammenpasst; wobei sich das Durchgangsloch (34) an dem sich verjüngenden Abschnitt (38) befindet; wobei der Erstreckungsabschnitt (40) mit dem sich verjüngenden Abschnitt (38) verbunden ist und sich an dem dritten Abschnitt (22) des Aufnahmelochs (16) befindet; wobei die Schaltbaugruppe (28) ein elastisches Element (42) aufweist; wobei ein Ende des elastischen Elements (42) an dem Schulterabschnitt (222) anliegt, während ein anderes Ende des elastischen Elements (42) eine Kraft auf den Erstreckungsabschnitt (40) in einer Richtung weg von dem Schulterabschnitt (222) ausübt, sodass die äußere Umfangsfläche des sich verjüngenden Abschnitts (38) an der Lochwand des zweiten Abschnitts (20) anliegt.

5. Gas-Schalt-Vorrichtung (1) nach Anspruch 4, wobei die Schaltbaugruppe (28) ein Blockierelement aufweist, das an dem Erstreckungsabschnitt (40) des Steckerelements (30) angeordnet ist; wobei das andere Ende des elastischen Elements (42) an dem Blockierelement anliegt.

6. Gas-Schalt-Vorrichtung (1) nach Anspruch 5, wobei das elastische Element (42) zwei Blockierplatten (422) und eine Feder (424) aufweist; wobei die zwei Blockierplatten (422) um den Erstreckungsabschnitt (40) herum passen, und eine der Blockierplatten (422) an dem Schulterabschnitt (222) anliegt, während die andere Blockierplatte (422) an dem Blockierelement anliegt; wobei die Feder (424) um den Erstreckungsabschnitt (40) herum passt und sichzwischen den zwei Blockierplatten (422) befindet.

7. Gas-Schalt-Vorrichtung (1) nach Anspruch 5, wobei der Auslassabschnitt (14) des Ventilkörpers (10) eine Begrenzungsnut (24) hat, die mit dem dritten Abschnitt (22) des Aufnahmelochs (16) kommuniziert; wobei die Begrenzungsnut (24) einen ersten Blockierabschnitt (242) und einen zweiten Blockierabschnitt (244) hat; wobei das Blockierelement in die Begrenzungsnut (24) eintritt; wobei, wenn das Steckerelement (30) in die erste Position (P1) gedreht wird/ist, das Blockierelement an den ersten Blockierabschnitt (242) anliegt; wobei, wenn das Steckerelement (30) in die zweite Position (P2) gedreht wird/ist, das Blockierelement an den zweiten Blockierabschnitt (244) anliegt.

## Revendications

1. Dispositif de commutation de gaz (1), comprenant :
un corps de vanne (10) comportant une partie d'entrée (12) et une partie de sortie (14), dans lequel la partie d'entrée (12) comporte un passage d'entrée (124) pour l'injection de gaz ; la partie de sortie (14) comporte un orifice de sortie (142) et une chambre de réception ; une paroi de la chambre de réception comporte une ouverture latérale (202) communiquant avec le passage d'entrée (124) ;
un ensemble de commutation (28) comprenant un élément bouchon (30) situé dans la chambre de réception, dans lequel l'élément bouchon (30) présente un trou traversant (34) situé dans une direction radiale de l'élément bouchon (30) et un trou axial (32) communiquant avec le trou traversant (34) et l'orifice de sortie (142) ; l'élément bouchon (30) peut être tourné entre une première position (P1) et une deuxième position (P2) dans une direction axiale de l'élément bouchon (30) ; lorsque l'élément bouchon (30) est dans la première position (P1), une surface périphérique extérieure de l'élément bouchon (30) ferme l'ouverture latérale (202) ; lorsque l'élément bouchon (30) est dans la deuxième position (P2), le trou traversant (34) communique avec l'ouverture latérale (202) ; et
un élément de manipulation (46) ayant une extrémité de connexion (462) et comportant un passage de gaz (48) à son intérieur, dans lequel une extrémité du passage de gaz (48) forme une entrée (482) à l'extrémité de connexion (462), et une autre extrémité du passage de gaz (48) est adaptée pour communiquer avec un tuyau de gaz (100) ; l'élément de manipulation (46) est relié de manière amovible à l'orifice de sortie (142) par l'intermédiaire de l'extrémité de connexion (462) ; l'extrémité de connexion (462) est reliée à l'élément bouchon (30), et le passage de gaz (48) communique avec le trou axial (32) ; l'élément de manipulation (46) entraîne l'élément bouchon (30) à tourner entre la première position (P1) et la deuxième position (P2) ;
dans lequel au moins un élément de positionnement (50) est disposé sur l'extrémité de connexion (462) de l'élément de manipulation (46) ; l'orifice de sortie (142) du corps de vanne (10) comporte un passage de connexion (182) ; une paroi interne du passage de connexion (182) comporte une rainure annulaire (182a) ; une partie d'extrémité de l'orifice de sortie (142) présente au moins un renfoncement (142a) communiquant avec la rainure annulaire (182a) ; ledit au moins un élément de positionnement (50) entre dans la rainure annulaire (182a) par l'intermédiaire de l'au moins un renfoncement (142a) ;
dans lequel l'élément bouchon (30) présente une première extrémité (302) et une deuxième extrémité (304) opposée à la première extrémité (302) dans une direction axiale de l'élément bouchon (30) ; le trou axial (32) présente un côté ouvert (322) formé à la première extrémité (302) et un côté fermé (324) situé entre la première extrémité (302) et la deuxième extrémité (304) ; la première extrémité (302) présente au moins une encoche (302a) ; la rainure annulaire (182a) entoure une périphérie radiale de ladite au moins une encoche (302a) ; lorsque l'élément bouchon (30) est situé dans la première position (P1), ledit au moins un élément de positionnement (50) entre dans ladite au moins une encoche (302a) par l'intermédiaire dudit au moins un renfoncement (142a) et est adapté pour entraîner l'élément bouchon (30) à tourner vers la deuxième position (P2) le long de la direction axiale de l'élément bouchon (30) ;
dans lequel ledit au moins un élément de positionnement (50) est disposé dans une direction radiale de l'extrémité de connexion (462) et présente une extrémité extérieure (502) faisant saillie hors d'une périphérie radiale de l'extrémité de connexion (462) et une extrémité intérieure (504) située dans le passage de gaz (48) ; lorsque l'extrémité de connexion (462) est connectée à l'élément bouchon (30), la première extrémité (302) de l'élément bouchon (30) est située dans le passage de gaz (48), et l'extrémité intérieure (504) dudit au moins un élément de positionnement (50) entre dans ladite au moins une encoche (302a), et l'extrémité extérieure (502) dudit au moins un élément de positionnement (50) entre dans la rainure annulaire (182a).

2. Dispositif de commutation de gaz (1) selon la revendication 1, dans lequel un élément d'étanchéité (52) est disposé dans le passage de gaz (48) et présente un trou traversant (522) communiquant avec le passage de gaz (48) ; lorsque l'extrémité de connexion (462) est connectée à l'élément bouchon (30), la première extrémité (302) de l'élément bouchon (30) vient en butée contre l'élément d'étanchéité (52), et le côté ouvert (322) du trou axial (32) communique avec le trou traversant (522).

3. Dispositif de commutation de gaz (1) selon la revendication 1, dans lequel, lorsque ledit au moins un élément de positionnement (50) entraîne l'élément bouchon (30) pour tourner vers la deuxième position (P2) le long de la direction axiale de l'élément bouchon (30), une paroi de rainure (182b) de la rainure annulaire (182a) restreint ledit au moins un élément de positionnement (50) dans la rainure annulaire (182a).

4. Dispositif de commutation de gaz (1) selon la revendication 1, dans lequel la partie de sortie (14) comporte un trou de réception (16) ; le trou de réception (16) comporte une première section (18), une deuxième section (20) et une troisième section (22) ; la première section (18) comporte le passage de connexion (182) ; la deuxième section (20) est située entre la première section (18) et la troisième section (22) ; une paroi de trou de la deuxième section (20) est de forme conique et forme la chambre de réception, et un diamètre de la deuxième section (20) diminue progressivement dans une direction allant de la première section (18) à la troisième section (22) ; une jonction entre la troisième section (22) et la deuxième section (20) présente une partie d'épaulement (222) ; l'élément bouchon (30) comprend une section conique (38) et une section d'extension (40) ; une surface périphérique extérieure de la section conique (38) correspond à la paroi de trou de la deuxième section (20) ; le trou traversant (34) est situé sur la section conique (38) ; la section d'extension (40) est reliée à la section conique (38) et est située au niveau de la troisième section (22) du trou de réception (16) ; l'ensemble de commutation (28) comprend un élément élastique (42) ; une extrémité de l'élément élastique (42) vient en butée contre la partie d'épaulement (222), tandis qu'une autre extrémité de l'élément élastique (42) exerce une force sur la section d'extension (40) dans une direction s'écartant de la partie d'épaulement (222), de sorte que la surface périphérique extérieure de la section conique (38) vient en butée contre la paroi de trou de la deuxième section (20).

5. Dispositif de commutation de gaz (1) selon la revendication 4, dans lequel l'ensemble de commutation (28) comprend un élément de blocage disposé au niveau de la section d'extension (40) de l'élément bouchon (30) ; l'autre extrémité de l'élément élastique (42) vient en butée contre l'élément de blocage.

6. Dispositif de commutation de gaz (1) selon la revendication 5, dans lequel l'élément élastique (42) comprend deux plaques de blocage (422) et un ressort (424) ; les deux plaques de blocage (422) s'adaptent autour de la section d'extension (40), et l'une des plaques de blocage (422) vient en butée contre la partie d'épaulement (222), tandis que l'autre plaque de blocage (422) vient en butée contre l'élément de blocage ; le ressort (424) s'adapte autour de la section d'extension (40) et est situé entre les deux plaques de blocage (422).

7. Dispositif de commutation de gaz (1) selon la revendication 5, dans lequel la partie de sortie (14) du corps de vanne (10) présente une rainure de restriction (24) communiquant avec la troisième section (22) du trou de réception (16) ; la rainure de restriction (24) présente une première partie de blocage (242) et une deuxième partie de blocage (244) ; l'élément de blocage entre dans la rainure de restriction (24) ; lorsque l'élément bouchon (30) est tourné vers la première position (P1), l'élément de blocage vient en butée contre la première partie de blocage (242) ; lorsque l'élément bouchon (30) est tourné vers la deuxième position (P2), l'élément de blocage vient en butée contre la deuxième partie de blocage (244).
